# EUROPEAN PATENT SPECIFICATION

(11) **EP 2 296 913 B1**
(45) Date of publication and mention of the grant of the patent: **19.12.2012**
(21) Application number: 09746797.1
(22) Date of filing: 15.05.2009
(51) Int. Cl.: B44C 5/04, B32B 37/24, B05D 1/34, B32B 27/26, B29C 47/00

(54) **METHOD FOR MANUFACTURING A LAMINATE AND PRODUCT OBTAINED**
VERFAHREN ZUR HERSTELLUNG EINES LAMINATS UND ERHALTENES PRODUKT
PROCEDE DE FABRICATION D'UN STRATIFIE ET PRODUIT FABRIQUE

(30) Priority: 15.05.2008 NL 1035423
(43) Date of publication of application: 23.03.2011
(73) Proprietor: Trespa International B.V., 6002 SM Weert (NL)
(72) Inventor: VAN DE WALL, Wilhelmus, Josephus, Alex, NL-5591 CS Heeze (NL)
(74) Representative: Algemeen Octrooi- en Merkenbureau
(86) International application number: PCT/NL2009/000116
(87) International publication number: WO 2009/139620

(56) References cited:
- EP-A- 0 578 957
- EP-A- 1 122 062
- EP-A- 1 477 303
- WO-A-01/48333
- WO-A-2004/103700
- WO-A-2007/081205
- DE-A- 3 010 060
- US-A- 3 290 204
- US-A- 4 726 986
- US-A- 4 789 604

## Description

The present invention relates to a method for manufacturing a laminate product which is produced by assembling two substrates provided with liquid coating layers by passing said substrates between two rotating guide rollers; the present invention further relates to the resulting laminate.

Such a method is known per se from US patent No. 4,789,604 in the name of the present applicant. According to said document, a liquid layer is applied to a substrate, for example kraft paper, which liquid layer can be radiation-polymerised. After the liquid layer has been applied to the substrate, a plastic film is applied to the liquid layer via two guide rollers, whereupon the assembly of substrate, liquid layer and plastic film is supplied to a radiation unit, which plastic film is removed after the assembly has left the radiation unit. Subsequently, another liquid layer is applied to the substrate thus provided with a cured layer, which liquid layer is transparent. The liquid, transparent layer is subsequently coated with a plastic film, using two guide rollers, whereupon the whole is passed through a radiation unit again, after which the plastic film is removed so as to obtain a substrate provided with two cured layers. In order to thus obtain a substrate provided with two separate layers, the layers need to be applied separately as single layers in separate process steps. This means that two separate coating stations are needed for the two separate layers at all times, or that several passages through a coating station are required.
International application WO 01/48333 relates to a process for the manufacturing of surface elements which comprises a
decorative upper layer and a supporting core wherein a supporting core with a desired format is manufactured and provided
with an upper side and a lower side. The upper side of the supporting core is provided with a decor, by for
example printing, which decor is positioned after a predetermined fixed point on the supporting core, whereby
the upper side of the supporting core is provided with a protecting, at least partly translucent, wear layer, or by being provided with one or more sheets of a-cellulose impregnated with thermosetting resin or lacquer.
International application WO 2007/081205 relates to a method for applying two or more layers to a substrate by means of a multilayer curtain coating process, wherein a curtain comprising at least two layers of coating liquids is applied to a substrate, which substrate is moved in a direction perpendicular to the curtain, after which the substrate thus provided with at least two liquid coatings is subjected to a curing step for curing the liquid coatings.
European patent application EP 0 578 957 relates to a process for applying a decorative layer consisting of a radiation-curable coating compound to a substrate, the decorative layer being exposed to a high-energy radiation and thereby being cross-linked and/or polymerized. Until the decorative layer has achieved a desired hardness, provision is made for the decorative layer which is to be hardened to be masked, in order to provide protection against the action of oxygen, on one side by the substrate and on the other side by a carrier film.
European patent application EP 1 122 062 relates to a method for making a colored multilayer composite by laminating to each other, and curing, two or more radiation-curable layers, one of these layers being a clear outer layer and the other layers being equipped with color pigments, which comprises the following steps: partially curing in a first step, the radiation-curable layers applied on supporting layers and completely curing in a second step, the radiation-curable layers.

The object of the present invention is to provide a method for manufacturing a laminate product in which the number of process steps for applying two or more liquid layers is minimised.

Another object of the present invention is to provide a method for manufacturing a laminate product in which the inclusion of air between the individual layers is minimised.

Another object of the present invention is to provide a method for manufacturing a laminate product in which the layer structure of the liquids is maintained during the provision of the second substrate upon passage between the two guide rollers.

The method as referred to in the introduction is defined in independent claim 1.

One or more of the above objects are accomplished by using such a method. It has been found that by providing in particular at least one of the substrates with two superposed, yet uncured liquid layers, the inclusion of air is minimised. It has moreover been found that the individual layers are not mixed or smeared together after having passed between the rotating guide rollers, so that the passage through the guide rollers has not undesirably disrupted the layer structure.

In a special embodiment, three superposed, yet uncured liquid layers are present on at least one substrate, whilst it is in particular preferable if the yet uncured liquid layers present on the substrate have been obtained by means of a curtain coating process.

Using the aforesaid curtain coating process, it is possible to impart different properties to the individual, yet uncured liquid layers, which makes it possible to produce "tailor-made" laminates. The term "yet uncured liquid layers" is understood to mean that the layers were not subjected to one or more pre-treatments prior to being passed through the rotating guide rollers. Such pre-treatments include drying steps, curing steps and/or radiation steps, which treatments are explicitly not used in the present invention. For specific information regarding the curtain coating process, reference is made to the present applicant's International application WO-A-2007/081205. It is desirable for the liquid layers to have a viscosity such that no intermixing of the liquid layers will take place prior to the passage thereof between the guide rollers. According to the invention, therefore, the viscosity of the liquid layers ranges between 200 - 3000 mPas, measured at a shearing rate of 1000 sec⁻¹.

Said multilayer curtain coating is carried out with a coating device provided with a die for effecting a liquid curtain consisting of a number of individual coating liquids. The die comprises a plurality of gaps or outlet openings for the coating liquid, which gaps are arranged parallel to each other and which are oriented perpendicularly to the direction of movement of the base, viz. the substrate, to which the coating liquid(s) is (are) to be passed. It is desirable to remove air inclusions and any dissolved gases from the coating liquids as much as possible, for example by applying a vacuum, before said coating liquids are supplied to the die. The length of the gap substantially corresponds to the width of the base. The base, whose surface is to be coated with the coating liquid(s) that flow(s) from the die, is continuously passed under said die by conveying means. By causing the liquid film, which exits the die in a free fall, to drop on the substrate that passes under said die, a base is obtained which is provided with a coating composed of a number of different coating liquids, which are supplied via the gaps in the die. Since the gaps are positioned one behind another, in spaced-apart relationship, seen in the direction of movement of the base, a multilayer liquid film will be developed in the die, which liquid film will already have the layer structure of the coating to be applied to the base that moves under the die upon exiting the die. The multilayer liquid film obtained as a result of the presence of several parallel outlet openings or gaps will land essentially vertically on the base passing thereunder due to the force of gravity, with the liquid film forming a curtain between the base and the die. A stable curtain can be obtained by correctly setting the process parameters, whilst at the same time preventing inclusion of air and intermixing of the at least two coatings on the base. The coating thus formed on the substrate, which consists of at least two superposed, yet uncured liquid layers , will subsequently be passed between the rotating guide rollers, the object being to provide the second substrate on the laminate, and be subjected to a treatment for curing or cross-linking the coating. The liquid layers present on the substrate will thus comprise a number of individual layers, in particular at least two layers, seen in the direction perpendicular to the substrate surface, which layers do not exhibit intermixing.

To obtain a specific degree of matting and/or scratch resistance of the assembly of the substrates with the liquid layers present therebetween, one of the substrates is preferably removed from the assembly after the curing step.

The assembly of the yet uncured liquid layers and the two substrates is subjected to an actinic radiation treatment, in particular selected from the group of EB (electron beam) and UV radiation, after being passed between the guide rollers so as to effect a cross-linking reaction in the yet uncured liquid layers, after which treatment the liquid layers are thus cured.

According to a special embodiment, three superposed, yet uncured liquid layers may be present on at least one substrate. In a specific embodiment, both substrates are preferably provided with a yet uncured liquid layer, at least one substrate being provided with at least two superposed, yet uncured liquid layers, before the two substrates are passed between the rotating guide rollers, during which passage the second substrate is provided.

Suitable substrates include a resin-impregnated decor paper and plastic films, in which case it is in particular preferable to use a phenol resin-impregnated decor paper as the substrate on which at least two superposed, yet uncured liquid layers are present. The substrates are preferably unwound from a supply roll before the two substrates are passed between the rotating guide rollers. A suitable layer thickness for the substrate is 10-300 µm, preferably 40-160 µm. A suitable substrate is a band-shaped substrate.

The present invention further relates to an assembly obtained by using the present method, wherein the amount of air bubbles having a diameter of more than 100 µm in the cured liquid layers is at most 100 per m² of substrate area, and wherein less than one air inclusion having a surface area of 0.3 mm² is present per m² of substrate area. The present assembly comprises, in succession, a substrate with cured liquid layers applied thereto and possibly a substrate which covers the cured liquid layers. Preferably, said at least two superposed cured liquid layers each have a thickness of 2 - 150 µm, more in particular, at least one of the cured liquid layers has a thickness of 5 - 50 µm. In a special embodiment, it is moreover preferable if the ratio between the thickness of said at least one substrate and the total thickness of the cured liquid layers on said at least one substrate ranges between 0.07 : 1 and 15:1.

The present invention further relates to the use of guide rollers for passing two substrates therebetween, wherein at least two superposed, yet uncured liquid layers are present on at least one substrate, for the purpose of minimising the occurrence of air inclusions. The spacing between the guide rollers is selected so that the two substrates touch one another and form one assembly upon exiting the passage through the guide rollers.

The amount of air bubbles having a diameter of more than 100 µm can be determined by visual evaluation of an area of 100 cm² of the substrate, using a stereomicroscope. The amount of air inclusions per 1 m² of substrate area that have a larger diameter is determined by visual evaluation of 5 m² substrate area.

The present invention will now be explained in more detail by means of a number of examples, in which connection it should be noted, however, that the present invention is by no means limited to the special data mentioned therein.

### Example 1

Band-shaped substrate 1: phenol resin-impregnated decor paper, 126 g/m²
Coating 1: radiation curable white coating, 100 µm, viscosity 1.5 Pas
Coating 2: radiation curable transparant coating 30 µm, viscosity 1 Pas
Band-shaped substrate 2: 30 g/m² polyester film
roller diameter 1: steel roller 300 mm
roller diameter 2: rubber roller 200 mm
line pressure: 1500 N/m
machine speed: 150 m/min
result: no air inclusions, no intermixing of the individual layers.

### Example 2

Band-shaped substrate 1: phenol resin-impregnated decor paper, 126 g/m²
Coating 1: radiation curable grey coating, 40 µm, viscosity 1.3 Pas
Coating 2: radiation curable metallic coating, 40 µm, viscosity 1.5 Pas
Coating 3: radiation curable transparante coating 30 µm, viscosity 1 Pas
Band-shaped substrate 2: 30 g/m² polyester film
roller diameter 1: steel roller 300 mm
roller diameter 2: rubber roller 200 mm
line pressure: 1500 N/m
machine speed: 150 m/min
result: no air inclusions, no intermixing of the individual layers.

## Claims

1. A method for manufacturing a laminate product, wherein two substrates are jointly passed between two rotating guide rollers, and at least two superposed, yet uncured liquid layers are present on at least one substrate, wherein the liquid layers have a viscosity such that no intermixing of the liquid layers will take place prior to the passage thereof between the rotating guide rollers, and wherein the viscosity of the liquid layers ranges between 200 and 3000 mPas, measured at a shearing rate of 1000 sec⁻¹.

2. A method according to claim 1, **characterised in that** three superposed, yet uncured liquid layers are present on at least one substrate.

3. A method according to either one or both of claims 1-2, **characterised in that** the yet uncured liquid layers present on the substrate have been obtained by means of a curtain coating process prior to the passage of the two substrates between the rotating guide rollers.

4. A method according to one or more of the preceding claims, **characterised in that** a crosslinking reaction of the yet uncured liquid layers is carried out, using actinic radiation, after the passage between the guide rollers, especially that said actinic radiation is selected from the group of EB (electron beam) and UV radiation.

5. A method according to one or more of the preceding claims, **characterised in that** the yet uncured liquid layers present on at least one substrate are not subjected to one or more pre-treatments, such as drying, curing and/or radiation, prior to being passed between the rotating guide rollers.

6. A method according to one or more of the preceding claims, **characterised in that** both substrates are provided with a yet uncured liquid layer, at least one of said substrates being provided with at least two superposed, yet uncured liquid layers, before the two substrates are passed between the rotating guide rollers.

7. A method according to one or more of the preceding claims, **characterised in that** the substrates are unwound from a supply roll before the two substrates are passed between the rotating guide rollers.

8. A method according to one or more of the preceding claims, **characterised in that** the thickness of each substrate ranges between 10 and 300 µm, preferably between 40 and 160 µm.

9. A method according to one or more of the preceding claims, **characterised in that** one substrate is removed from the assembly after the passage between the rotating guide rollers.

10. A method according to one or more of the preceding claims, **characterised in that** the substrates are selected from the group consisting of decor paper, resin-impregnated paper and plastic films, especially that a phenol resin-impregnated decor paper is used as the substrate on which at least two superposed, yet uncured liquid layers are present.

11. A method according to one or more of the preceding claims, **characterised in that** the substrates are made of different materials.

12. An assembly obtained by carrying out a method as defined in one or more of the preceding claims, comprising, in succession, a substrate with cured liquid layers applied thereto and possibly a substrate which covers the cured liquid layers, **characterised in that** the amount of air bubbles having a diameter of more than 100 µm in the cured liquid layers is at most 100 per m² of the substrate, wherein less than one air inclusion having a surface area of 0.3 mm² is present per m² of substrate area.

13. An assembly according to claim 12, **characterised in that** said at least two superposed cured liquid layers each have a thickness of 2 - 150 µm, especially that at least one of the cured liquid layers has a thickness of 5 - 50 µm.

14. An assembly according to claims 12-13, **characterised in that** the ratio between the thickness of said at least one substrate and the total thickness of the cured liquid layers on said at least one substrate ranges between 0.07 : 1 and 15 : 1.

## Patentansprüche

1. Verfahren zur Herstellung eines Laminatprodukts, wobei zwei Substrate gemeinsam zwischen zwei sich drehenden Führungsrollen durchgeführt werden und wenigstens zwei übereinander liegende, noch nicht ausgehärtete flüssige Schichten auf wenigstens einem Substrat vorhanden sind, wobei die flüssigen Schichten eine derartige Viskosität haben, dass keine Durchmischung der flüssigen Schichten vor deren Durchführung zwischen den sich drehenden Führungsrollen stattfindet, und wobei die Viskosität der flüssigen Schichten in einem Bereich zwischen 200 und 3000 mPas liegt, gemessen bei einer Scherrate von 1000 s⁻¹.

2. Verfahren nach Anspruch 1, **dadurch gekennzeichnet, dass** drei übereinander liegende, noch nicht ausgehärtete flüssige Schichten auf wenigstens einem Substrat vorhanden sind.

3. Verfahren nach einem oder beiden der Ansprüche 1-2, **dadurch gekennzeichnet, dass** die auf dem Substrat vorhandenen, noch nicht ausgehärteten flüssigen Schichten durch einen Gießbeschichtungsprozess vor der Durchführung der beiden Substrate zwischen den sich drehenden Führungsrollen erhalten worden sind.

4. Verfahren nach einem oder mehreren der vorhergehenden Ansprüche, **dadurch gekennzeichnet, dass** nach der Durchführung zwischen den Führungsrollen eine Vernetzungsreaktion der noch nicht ausgehärteten flüssigen Schichten unter Verwendung einer aktinischen Strahlung ausgeführt wird, insbesondere, dass die aktinische Strahlung aus der Gruppe der EB-Strahlung (Elektronenstrahl-Strahlung) und UV-Strahlung ausgewählt ist.

5. Verfahren nach einem oder mehreren der vorhergehenden Ansprüche, **dadurch gekennzeichnet, dass** die auf wenigstens einem Substrat vorliegenden, noch nicht ausgehärteten flüssigen Schichten nicht einer oder mehreren Vorbehandlungen wie Trocknen, Aushärten und/oder Bestrahlung unterzogen werden, bevor sie zwischen den sich drehenden Führungsrollen durchgeführt werden.

6. Verfahren nach einem oder mehreren der vorhergehenden Ansprüche, **dadurch gekennzeichnet, dass** bevor die beiden Substrate zwischen den sich drehenden Führungsrollen durchgeführt werden, beide Substrate mit einer noch nicht ausgehärteten flüssigen Schicht versehen werden, wobei wenigstens eines der Substrate mit wenigstens zwei übereinander liegenden, noch nicht ausgehärteten flüssigen Schichten versehen wird.

7. Verfahren nach einem oder mehreren der vorhergehenden Ansprüche, **dadurch gekennzeichnet, dass** die Substrate von einer Vorratsrolle abgewickelt werden, bevor die beiden Substrate zwischen den sich drehenden Führungsrollen durchgeführt werden.

8. Verfahren nach einem oder mehreren der vorhergehenden Ansprüche, **dadurch gekennzeichnet, dass** die Dicke eines jeden Substrats im Bereich zwischen 10 und 300 µm liegt, vorzugsweise zwischen 40 und 160 µm.

9. Verfahren nach einem oder mehreren der vorhergehenden Ansprüche, **dadurch gekennzeichnet, dass** nach der Durchführung zwischen den sich drehenden Führungsrollen ein Substrat von der Anordnung entfernt wird.

10. Verfahren nach einem oder mehreren der vorhergehenden Ansprüche, **dadurch gekennzeichnet, dass** die Substrate aus der Gruppe ausgewählt sind, die aus Dekorpapier, harzgetränktem Papier und Kunststofffolien besteht, insbesondere, dass ein phenolharzgetränktes Dekorpapier als Substrat verwendet wird, auf welchem wenigstens zwei übereinander liegende, noch nicht ausgehärtete flüssige Schichten vorhanden sind.

11. Verfahren nach einem oder mehreren der vorhergehenden Ansprüche, **dadurch gekennzeichnet, dass** die Substrate aus verschiedenen Materialien bestehen.

12. Anordnung, die durch Ausführen eines Verfahrens nach einem oder mehreren der vorhergehenden Ansprüche erhalten wird, die in Folge ein Substrat mit darauf aufgebrachten, ausgehärteten flüssigen Schichten und eventuell ein Substrat umfasst, das die ausgehärteten flüssigen Schichten bedeckt, **dadurch gekennzeichnet, dass** die Menge an Luftblasen mit einem Durchmesser von mehr als 100 µm in den ausgehärteten flüssigen Schichten höchstens 100 pro m² des Substrats beträgt, wobei weniger als ein Lufteinschluss mit einer Oberfläche von 0,3 mm² pro m² der Substratfläche vorhanden ist.

13. Anordnung nach Anspruch 12, **dadurch gekennzeichnet, dass** die wenigstens zwei übereinander liegenden, ausgehärteten flüssigen Schichten jeweils eine Dicke von 2-150 µm haben, insbesondere, dass wenigstens eine der ausgehärteten flüssigen Schichten eine Dicke von 5 - 50 µm hat.

14. Anordnung nach den Ansprüchen 12-13, **dadurch gekennzeichnet, dass** das Verhältnis zwischen der Dicke des wenigstens einen Substrats und der Gesamtdicke der ausgehärteten flüssigen Schichten auf dem wenigstens einen Substrat im Bereich zwischen 0,07 : 1 und 15:1 1 liegt.

## Revendications

1. Procédé pour fabriquer un produit stratifié, dans lequel deux substrats passent conjointement entre deux rouleaux de guidage rotatifs, et au moins deux couches liquides superposées mais non polymérisées, sont présentes sur au moins un substrat, dans lequel :
les couches liquides ont une viscosité de sorte qu'aucun mélange des couches liquides n'a lieu avant leur passage entre les rouleaux de guidage rotatifs, et dans lequel la viscosité des couches liquides est comprise entre 200 et 3000 mPas, mesurée à un taux de cisaillement de 1000 s⁻¹.

2. Procédé selon la revendication 1, **caractérisé en ce que** trois couches liquides superposées, mais non polymérisées sont présentes sur au moins un substrat.

3. Procédé selon l'une ou les deux revendications 1 à 2, **caractérisé en ce que** les couches liquides non encore polymérisées présentes sur le substrat ont été obtenues au moyen d'un procédé de revêtement par rideau avant le passage des deux substrats entre les rouleaux de guidage rotatifs.

4. Procédé selon une ou plusieurs des revendications précédentes, **caractérisé en ce qu'**une réaction de réticulation des couches liquides non encore polymérisées est réalisée, en utilisant le rayonnement actinique, après le passage entre les rouleaux de guidage, en particulier de sorte que ledit rayonnement actinique est choisi dans le groupe comprenant l'EB (faisceau électronique) et le rayonnement UV.

5. Procédé selon une ou plusieurs des revendications précédentes, **caractérisé en ce que** les couches liquides non encore polymérisées présentes sur au moins un substrat ne sont pas soumises à un ou plusieurs prétraitements, tels que le séchage, la polymérisation et/ou le rayonnement, avant d'être passées entre les rouleaux de guidage rotatifs.

6. Procédé selon une ou plusieurs des revendications précédentes, **caractérisé en ce que** les deux substrats sont prévus avec une couche liquide mais non polymérisée, au moins l'un desdits substrats étant prévu avec au moins deux couches liquides superposées mais non polymérisées, avant que les deux substrats passent entre les rouleaux de guidage rotatifs.

7. Procédé selon une ou plusieurs des revendications précédentes, **caractérisé en ce que** les substrats sont déroulés d'un rouleau d'alimentation avant que les deux substrats ne passent entre les rouleaux de guidage rotatifs.

8. Procédé selon une ou plusieurs des revendications précédentes, **caractérisé en ce que** l'épaisseur de chaque substrat est comprise entre 10 et 300 µm, de préférence entre 40 et 160 µm.

9. Procédé selon une ou plusieurs des revendications précédentes, **caractérisé en ce qu'**un substrat est retiré de l'ensemble après le passage entre les rouleaux de guidage rotatifs.

10. Procédé selon une ou plusieurs des revendications précédentes, **caractérisé en ce que** les substrats sont choisis dans le groupe comprenant un papier décoratif, le papier imprégné de résine et les films plastiques, en particulier un papier décoratif imprégné de résine phénol est utilisé en tant que substrat sur lequel au moins deux couches liquides superposées mais non polymérisées sont présentes.

11. Procédé selon une ou plusieurs des revendications précédentes, **caractérisé en ce que** les substrats sont réalisés avec des matériaux différents.

12. Ensemble obtenu en réalisant un procédé selon une ou plusieurs des revendications précédentes, comprenant, en succession, un substrat avec des couches liquides polymérisées appliquées sur ce dernier et éventuellement un substrat qui recouvre les couches liquides polymérisées, **caractérisé en ce que** la quantité de bulles d'air ayant un diamètre supérieur à 100 µm dans les couches liquides polymérisées est au maximum de 100 par m² de substrat, dans lequel moins d'une inclusion d'air ayant une surface de 0,3 mm² est présente par m² de surface de substrat.

13. Ensemble selon la revendication 12, **caractérisé en ce que** lesdites au moins deux couches liquides polymérisées superposées ont chacune une épaisseur de l'ordre de 2 à 150 pm, en particulier **en ce qu'**au moins l'une des couches liquides polymérisées a une épaisseur de l'ordre de 5 à 50 µm.

14. Ensemble selon les revendications 12 à 13, **caractérisé en ce que** le rapport entre l'épaisseur dudit au moins un substrat et l'épaisseur totale des couches liquides polymérisées sur ledit au moins un substrat est compris entre 0,07:1 et 15:1.
